## Europäisches Patentamt
## European Patent Office
## Office européen des brevets

(11) Veröffentlichungsnummer: **0 244 765**
**B1**

(12) # EUROPÄISCHE PATENTSCHRIFT

(45) Veröffentlichungstag der Patentschrift:
12.07.89

(51) Int. Cl.⁴: **E 03 F 5/14,** B 30 B 9/06

(21) Anmeldenummer: **87106290.7**

(22) Anmeldetag: **30.04.87**

(54) **Verfahren zum Ausscheiden von Feststoffen aus Fäkalschlamm und Vorrichtung zur Durchführung des Verfahrens.**

(30) Priorität: **09.05.86 DE 3615681**

(43) Veröffentlichungstag der Anmeldung:
**11.11.87 Patentblatt 87/46**

(45) Bekanntmachung des Hinweises auf die Patenterteilung:
**12.07.89 Patentblatt 89/28**

(84) Benannte Vertragsstaaten:
**AT BE CH DE ES FR GB GR IT LI LU NL SE**

(56) Entgegenhaltungen:
**WO-A-85/05616**
**FR-A-383 924**
**FR-A-2 238 887**
**GB-A-1 059 447**
**US-A-4 377 108**

(73) Patentinhaber: **Seyer, Hans, Am Gehölz 15, D-2247 Lunden (DE)**

(72) Erfinder: **Seyer, Hans, Am Gehölz 15, D-2247 Lunden (DE)**

(74) Vertreter: **Schmidt- Bogatzky, Jürgen, Dr. Ing., Schlossmühlendamm 4, D-2100 Hamburg 90 (DE)**

EP 0 244 765 B1

LIBER, STOCKHOLM 1989

**Beschreibung**

Die Erfindung betrifft ein Verfahren zum Ausscheiden von Feststoffen aus Fäkalschlamm in einem Fäkalvorlaufbehälter mit eingebautem Siebrechen durch mechanisches Filtern und Auspressen der Filterrückstände und eine Vorrichtung zur Durchführung des Verfahrens.

Bei der Weiterverarbeitung bzw. -behandlung von Fäkalschlamm besteht das Problem, daß in dem aus Haus-Kläranlagen entfernten Fäkalschlamm regelmäßig Feststoffe oder solche Stoffe enthalten sind, die einem biologischen Abbau entweder nicht oder nur nach einer mechanischen Zerkleinerung zugänglich sind. Es kann sich hierbei beispielsweise um Feudel, Strumpfhosen, Hygieneartikel, Dosen, Flaschen und dgl. handeln. Aus diesem Grunde wird angestrebt die nicht unmittelbar biologisch zersetzbaren Feststoffe aus dem Fäkalschlamm zu entfernen. Hierzu ist bereits vorgeschlagen worden, den Fäkalschlamm in eine Kammer einzubringen und dort mechanisch vorzufiltern, dann die Filterrückstände mit einem Kolben zu verdichten und diese Dickstoffe dann in einem Container zu entleeren, um sie danach abschließend auf einer Deponie lagern zu können. Hierbei besteht der Nachteil, daß eine einwandfreie Filterung nicht möglich ist, so daß unter Umständen eine Verstopfung von Leitungen im Bereich des Klärwerks erfolgt, was dessen Betrieb beeinträchtigt. Ein weiterer Nachteil besteht darin, daß das bekannte System zur Atmosphäre offen ist, so daß eine Geruchsbelästigung der Umgebung erfolgt. Der Transport in Containern wird darüber hinaus als unangenehm empfunden, da sowohl am Standort des Container wie auch auf der Mülldeponie eine Geruchsbelästigung erfolgt und die abzulagernden Fäkalschlammreste aufgrund hoher Rest Feuchtigkeit ein relativ großen Volumen einnehmen.

Die Aufgabe der Erfindung besteht darin, das bekannte Verfahren und die bekannte Vorrichtung so zu verbessern, daß bei hohem Fäkalschlammdurchsatz und kleinem Bauvolumen der Vorrichtung sowie geringen Betriebskosten eine geruchsfreie Aufbereitung des Fäkalschlamms erzielt wird.

Erfindungsgemäß erfolgt die Lösung der Aufgabe dadurch, daß der Fäkalschlamm unter Druck in einer Kammer in eine vergleichmäßigte Wirbelströmung versetzt und durch ein mechanisches Grobfilter und ein mechanisches Feinfilter gepreßt wird, wobei die Feststoffe bestimmter Größe von den Filtern zurückgehalten werden und der dünnflüssige Teil des Fäkalschlamms zur Kläranlage abfließt, dann die in der Kammer an den Filtern verbliebenen Feststoffe mit einem Kolben mechanisch verdichtet und einer Feststoffverpackungseinrichtung zugeführt werden, wobei die beim Verdichten ausgepreßte Flüssigkeit der Kläranlage zufließt und dann der Kolben in seine Ausgangsstellung zurückgezogen wird, wobei der Grobfilter und der Feinfilter durch in die Kammer eingesprühtes Druckwasser von anhaftenden Feststoffen gereinigt wird und das Gemisch aus Filterfeststoffen und Wasser der Kläranlage zugeführt wird.

Nach einem weiteren Merkmal der Erfindung ist die Vorrichtung zur Durchführung des Verfahrens dadurch gekennzeichnet, daß der Filter aus einem äußeren Feinfilter und einem im Abstand von diesem angeordneten Grobfilter besteht, daß der in der Filterkammer koaxial zu deren Mittelachse verschiebliche Kolben mit dem Fein-Filter und dem Grobfilter in Wirkeingriff ist und daß an dem der Fäkalschlammeinlaßöffnung abgewandten Abschnitt der Filtertrommel eine Feststoffaustrittsöffnung ausgebildet ist, die mit einer Feststoffdeponiereinrichtung verbunden ist.

Ausgestaltungen der Erfindung werden in den abhängigen Ansprüchen beschrieben und nachstehend anhand der in den Zeichnungen schematisch dargestellten Vorrichtung näher erläutert. Es zeigt:

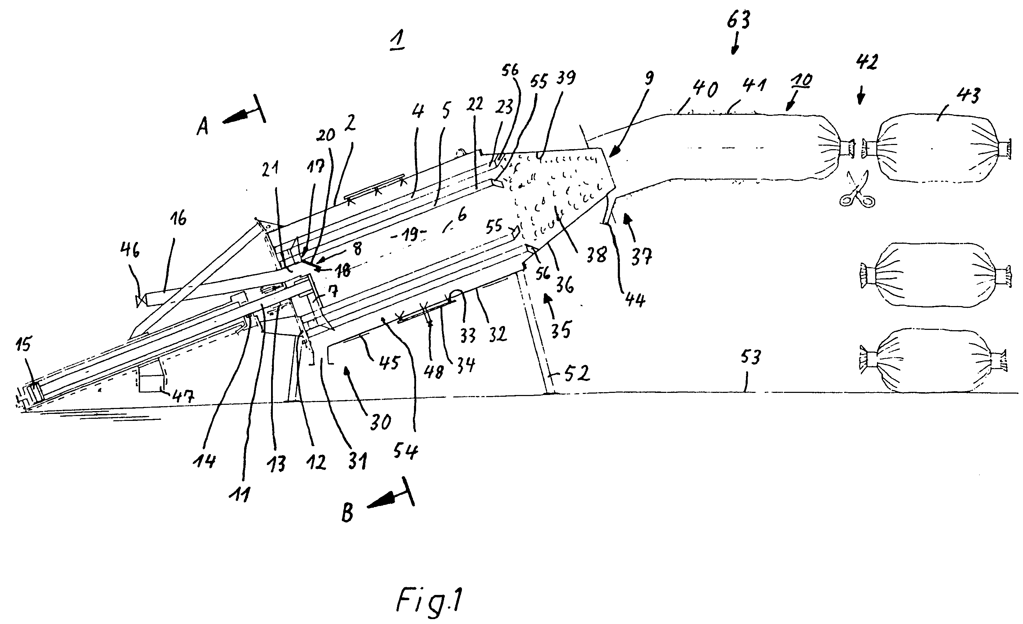

Fig. 1　eine erfindungsgemäße Vorrichtung in
bis 3　verschidenen Betriebsstellungen,

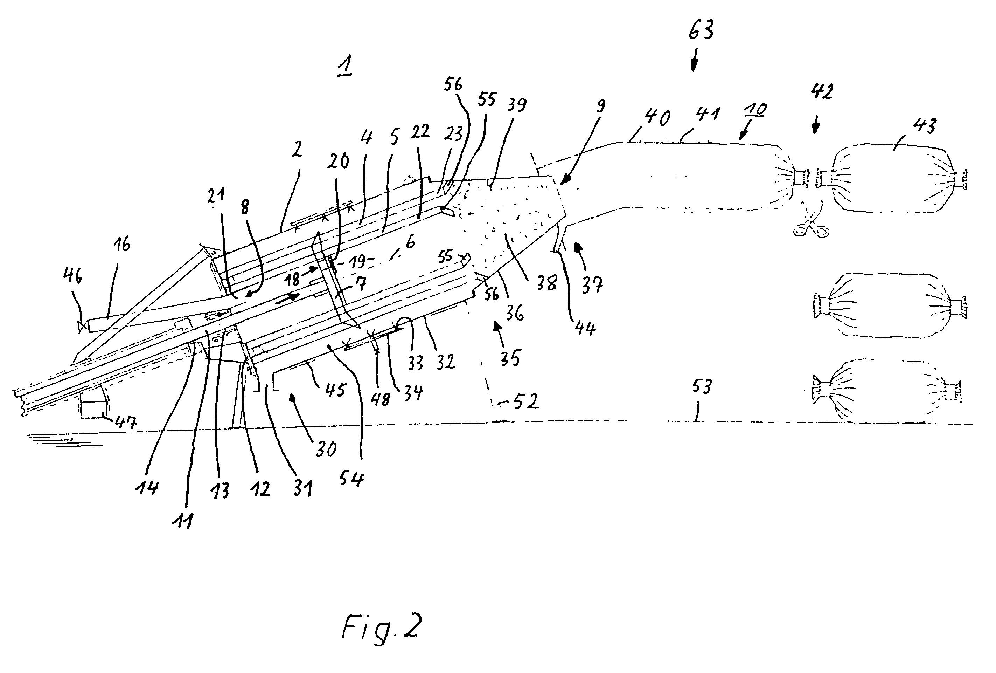

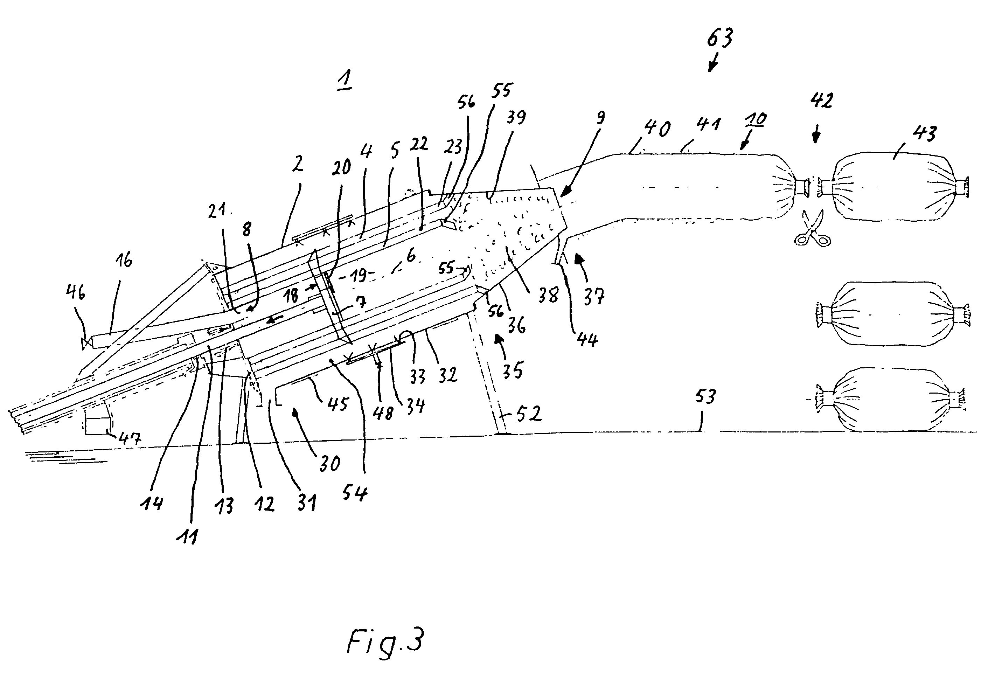

Fig. 4　eine weitere Ausgestaltung der Vorrichtung nach Fig. 1 bis 3,

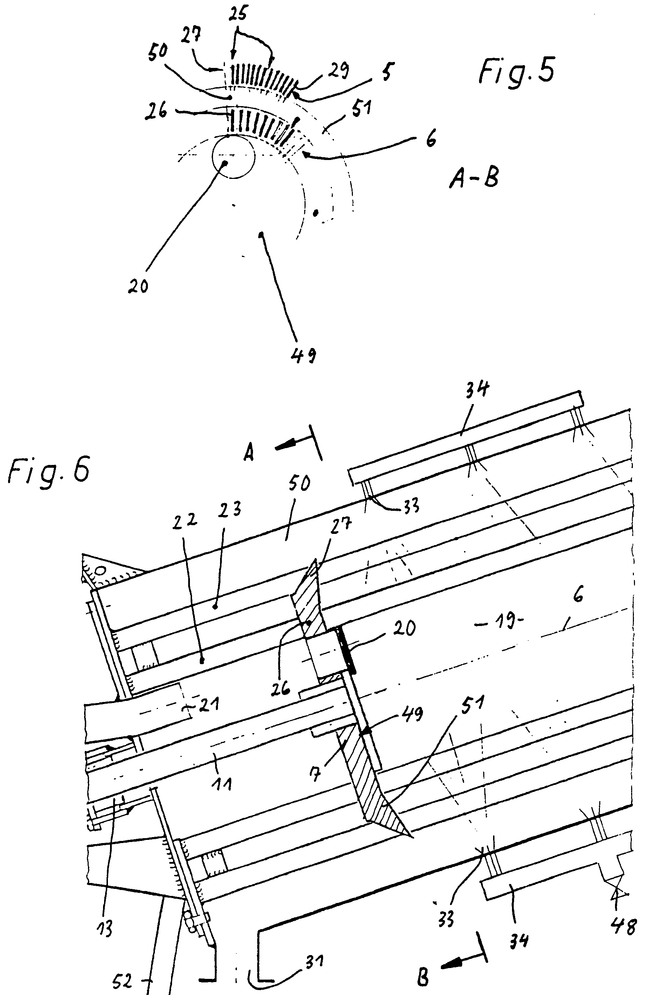

Fig. 5　eine Queransicht der Vorrichtung nach Fig. 1 bis 4 in einem Schnitt A - B,
Fig. 6　einen Ausschnitt aus der Filterkammer mit Kolben der Vorrichtung nach Fig. 1 bis 4 in einer vergrößerten Darstellung.

Die Vorrichtung 1 besteht aus einer Filterkammer 2, die mittels Stützen 52 in einem Winkel zur Horizontalen aufwärts geneigt auf einem Boden 53 abgestützt ist. Als zweckmäßig hat sich z. B. ein Neigungswinkel von 20° erwiesen. Der Neigungwinkel ist grundsätzlich so auszubilden, daß in der Filterkammer 2 eine optimale Wirbelströmung des eingepreßten Fäkalschlamms erzielt wird. In der Wirbelkammer 2 befinden sich ein Grobfilter 5, ein Feinfilter 4 sowie ein Kolben 7, der mittels einer Kolbenstange 11 mit einem Hydraulikzylinder 3 verbunden ist. Im Hydraulikzylinder 3 ist an der Kolbenstange 11 ein Hydraulikkolben 15 angeordnet, der mit Hydrauliköl beaufschlagbar ist. Durch den Kammerboden 12 ist ein Fäkalschlammeinlaßrohr 16 geführt, das mittels eines schematisch dargestellten Absperrventils 46 verschlossen werden kann. An dem dem Kammerboden 12 abgewandten Endabschnitt 35 der Filterkammer 2 ist ein konischer Auslauftrichter 36 angeordnet, dessen Ausgang 37 in ein Führungsrohr 40 eingeführt ist. Das Führungsrohr 40 ist einer Feststoffverpackungseinrichtung 10 zugeordnet, die nicht näher dargestellt ist. Auf dem Führungsrohr 10 befindet sich eine Endlosfolie 41, aus der nach Verfüllen mit verdichteten Fäkalfeststoffen mittels einer Trenn- und Klemmeinrichtung 42 Ballen oder Beutel 43 hergestellt werden, die nach einer ggf. erforderlichen Zwischenlagerung auf einer Deponie endgelagert werden können.

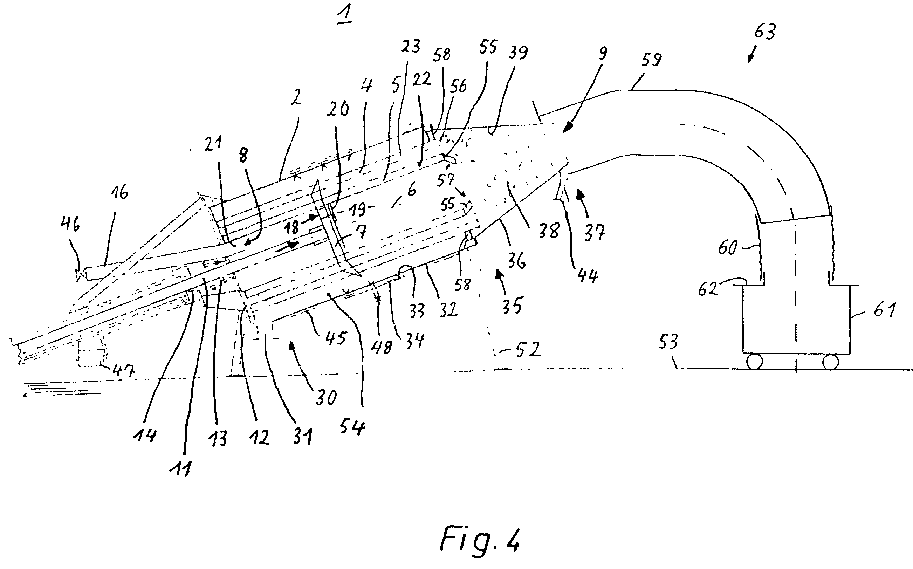

Es ist auch möglich, zur Ausbildung einer Feststoffdeponiereinrichtung 63 an dem Ausgang 37 des Auslauftrichters 36 ein Depotauslaufrohr 59 anzuordnen, an dessen Ausgang ein Schlauch 60 befestigt sein kann. Dieser Schlauch kann mit dem Depotdeckel 62 eines Depots verbunden sein, das auf Rädern gelagert beweglich ausgebildet sein kann (Fig. 4). Bei dieser Ausbildung der Vorrichtung 1 wird nach Befüllung des Depots 61 mit Fäkalfeststoffen das Depot 61 von dem Schlauch 60 getrennt und durch ein neues ersetzt. Die in dem Depot 61 befindlichen Fäkalfeststoffe werden zur weiteren Behandlung abgeführt.

Die Kolbenstange 11 ist durch einer Stopfbuchse 13 im Bereich des Kammerbodens 12 zum Filterraum 19 abgedichtet. Zum Druckraum des Hydraulikzylinders 3 ist die Kolbenstange 11 mittels einer weiteren Stopfbuchse 14 abgedichtet, die im Abstand von dem Kammerboden 12 an dem Hydraulikzylinder ausgebildet ist. Hierdurch wird verhindert, daß eventuell aus dem Hydraulikzylinder 3 austretendes Drucköl in den Filterraum 19 gelangt und die Klärschlammaufbereitung belastet.

Das Fäkalschlammeinlaßrohr 16 ist so durch den unteren Kammerboden 12 geführt, das es auslaßseitig mit einer Verschlußeinrichtung 17 in Eingriff bringbar ist. Die Verschlußeinrichtung 17 ist an dem Kolben 7 ausgebildet. Dieser weist eine Durchbrechung 18 auf, die mittels einer dem Filterraum 19 zugeordneten Klappe 20 verschließbar ist. In der dem Kammerboden 12 zugewandten Endstellung des Kolbens 7 ist die Durchbrechung 18 koaxial zur Austrittsöffnung 21 des Fäkalschlammeinlaßrohres 16 angeordnet. Bei Befüllung des Filterraums 19 mit Fäkalschlamm durch das Fäkalschlammeinlaßrohr 16 öffnet die Klappe 20 automatisch und wird beim hochschieben des Kolbens 7 durch den in dem Filterraum 19 befindlichen Fäkalschlamm wieder geschlossen. Die Klappe 20 weist ein derartiges Gewicht auf, daß sie auf dem durch die Durchbrechung 18 eintretenden Strahl des Fäkalschlamms aufliegt, wodurch dieser verwirbelt zur Kammerwand 32 der Filterkammer 2 abgelenkt wird. Hierdurch wird verhindert, daß der Strahl des Fäkalschlamms bei Inbetriebnahme der Vorrichtung 1 bei entsprechendem Druck über die gesamte Länge der Filterkammer 2 bis in den in dem Auslauftrichter 36 angeordneten Filtratpropfenersatz 38 durchschlägt und diesen beschädigt. Dieser Filtratpropfenersatz 38 dient bei Inbetriebnahme der Vorrichtung 1 dazu, in dem Filterraum 19 den erforderlichen Druck zu halten und ein Durchdringen ungefilterten Fäkalschlamms zur Feststoffverpackungseinrichtung 10 zu verhindern.

Der Grobfilter 5 und der Feinfilter 4 sind durch sich über die Länge der Filterkammer 2 erstreckende am Kammerboden 12 befestigte Stäbe 22, 23 gebildet Die Endabschnitte 56 der Stäbe 23 sind nach außen abgewinkelt und mit der Filterkammer 2 verbunden. Es ist auch möglich, die Endabschnitte 56 mit dem Auslauftrichter 36 zu verbinden. Es ist auch möglich, die Endabschnitte 56 der Stäbe 23 koaxial zu deren Längsachsen auszubilden. In diesem Fall werden die Stäbe 23 zur Stabilisierung mittels Stützen 58 mit der Filterkammer 2 verbunden (Fig. 4). Die Endabschnitte 55 der Stäbe 22 sind als Rückhalter zur Mittelachse 6 der Filterkammer 2 gerichtet abgewinkelt ausgebildet. In den Zwischenräumen 24, 25 zwischen den Stäben 22, 23 sind mit dem Kolben 7 verbundene Abstreifer 26, 27 geführt. Die Stäbe 22, 23 weisen einen rechteckigen Querschnitt auf und sind so angeordnet, daß ihre langen Seitenflächen 28, 29 radial zur Mittelachse 6 der Filterkammer 2 ausgerichtet sind. Hierdurch sind die Zwischenräume 25, 26 in Fließrichtung keilförmig ausgebildet, so daß in den Zwischenräumen 25, 26 kein Filtergut festklemmen kann und der von Feststoffen gereinigte Fäkalschlamm in die Abflußkammer 54 der Filterkammer 2 dringen und über den Wasserauslaßstutzen 31 zum Klärwerk abgeführt werden kann. Wie in Fig. 4 dargestellt, besteht der Kolben 7 aus einer mittigen Kolbenplatte 49, an deren Umfang radial die Abstreifer 26 angeordnet sind. Im Feinfilterraum 50 zwischen dem Grobfilter 5 und dem Feinfilter 4 ist ein Ringkolben 51 vorgesehen, der mit den Abstreifern 26 verbunden ist. An dem äußeren Umfang des Ringkolbens 51 sind die radial nach außen gerichteten Abstreifer 27 ausgebildet und in den Zwischenräumen 25 angeordnet.

An der Kammerwand 32 der Filtertrommel 2 sind mit Druckwasser beaufschlagbare in den Filterraum gerichtete Düsen 33 angeordnet. Diese Düsen 33 sind über eine Ringleitung 34 miteinander und mit einem Druckwasserventil 48 verbunden.

Die Innenfläche 39 des Auslauftrichters 36 ist als Druckwasser beaufschlagbare in den Filterraum gerichtete Düsen 33 angeordnet. Diese Düsen 33 sind über eine Ringleitung 34 miteinander und mit einem Druckwasserventil 48 verbunden.

Die Innenfläche 39 des Auslauftrichters 36 ist als Gleitfläche ausgebildet. Hierzu ist es möglich in dem Auslauftrichter 36 einen besonderen Einsatz aus einem Blech- oder Kunststoff mit gleitfähiger Oberfläche einzusetzen. Vor Befüllung der Filterkammer 2 mit einer Fäkalschlammcharge wird zur Aufrechterhaltung eines ausreichenden Drucks in der Filterkammer 2 der Auslauftrichter 36 mit einem Filtratpropfenersatz 38 verfüllt. Dieses kann z. B. Stroh oder Holzwolle sein. Von Vorteil ist es, als Filtratpropfenersatz 38 solche Stoffe zu wählen, die biologisch abbaubar sind. Der Filtratpropfenersatz 38 wird bei dem weiteren Betrieb der Vorrichtung 1 beim Herauspressen der Fäkalfeststoffe in die Feststoffverpackungseinrichtung 10 dieser ebenfalls zugeführt.

Um bei evtl. Betriebsstörungen oder zur allgemeinen Überprüfung schnell einen Einblick in die Filterkammer 2 nehmen zu können, sind an dieser an verschiedenen Stellen verschließbare Inspektionsöffnungen 45 vorgesehen.

Der Durchsatz einer Fäkalschlammcharge erfolgt in drei Stufen. Zum Druckfiltern wird von einem Schlammwagen über das Fäkalschlammeinlaßrohr 16 Fäkalschlamm in den Filterraum 19 eingepreßt, wobei in dem Filterraum 19 eine gleichmäßige Wirbelströmung erzeugt wird. Diese Wirbelströmung ermöglicht es, daß in dem Fäkalschlamm befindliche Feststoffe an dem Grobfilter 5 bzw. Feinfilter 4 haften bleiben und die Restflüssigkeit mit den feinen Bestandteilen über den Wasserauslaßstutzen 31 dem Klärwerk zugeführt wird. Zum daran anschließenden Auspressen der an dem Großfilter 5 und Feinfilter 4 haftenden Feststoffe wird der Kolben 7 durch Betätigung des Hydraulikzylinders 3 zum oberen Endabschnitt 35 verschoben, wobei die Abstreifer 26, 27 die Feststoffe von den Stäben 22, 23 nach oben in den Auslauftrichter 36 fördern. Das Filtrat gelangt mit dem Filtratpropfenersatz 38 in den Bereich der Feststoffverpackungseinrichtung 10 und wird dort zu den Beuteln oder Ballen 43 verpackt. Bei einer Ausbildung der Vorrichtung 1 nach Fig. 4 wird das Filtrat dagegen über das Depotauslaufrohr 59 und den Schlauch 60 dem Depot 61 zugeführt. Eine besondere Abpackung in Beuteln oder Ballen 43 erfolgt in diesem Fall nicht. Das beim Verdichten anfallende Restwasser wird über den Wasserablaßstutzen 44 am Ausgang 37 des Auslauftrichters 36 abgeführt. Beim Zurückfahren des Kolbens 7 in seine Ausgangsstellung am Kammerboden 12 wird durch Betätigung des Druckwasserventils 48 über die Düsen 33 Druckwasser in den Filterraum 19 eingespritzt wodurch an den Stäben 22, 23 des Grobfilters 5 bzw. Feinfilters 4 noch anhaftende Feststoffreste entfernt werden. Das Gemisch aus Druckwasser und Feststoffresten wird über den Wasserauslaßstutzen 31 dem Klärwerk zugeführt. Die Abstreifer 26, 27 sind dabei so ausgebildet, daß sie an den Stäben 22, 23 befindliche Feststoffreste abkratzen. Wenn der Kolben 7 seine untere Endstellung erreicht hat, kann die Filtertrommel 2 mit einer neuen Fäkalschlammcharge beschickt werden.

Die Vorrichtung 1 ermöglicht durch ihr geschlossenes System eine geruchsfreie Betriebsweise. Selbst bei großen Schlammwagen ist ein schneller Chargendurchsatz möglich obwohl das Bauvolumen relativ klein gehalten ist. Hierdurch sind die Herstellungskosten relativ gering, ebenso die Betriebskosten, da mehrfache Containerumladungen mit besonderen Geruchsbekämpfungseinrichtungen entfallen. Die Vorrichtung 1 zeichnet sich ferner durch eine geringe Störanfälligkeit aus, da keine rotierenden Teile vorhanden sind und der mechanische Verschleiß nur gering ist.

Die Steuerung der Vorrichtung erfolgt mit einer nicht näher dargestellten elektronischen oder elektromagnetischen Steuereinrichtung. Diese wirkt auf das Absperrventil 26 des Fäkalschlammeinlaßrohrs 16, den Hydraulikzylinder 3 und das den Düsen 33 zugeordnete Druckwasserventil 48 ein. Mittels dieser Steuereinrichtung ist der Betrieb der Vorrichtung 1 manuell oder selbsttätig steuerbar. Die Steuereinrichtung weist zur Funktionserfüllung in einer geeigneten elektrischen Schaltung miteinander verbundene an sich bekannte Relais, Zeitrelais, Schalter und dgl. auf.

**Patentansprüche**

1. Verfahren zur Ausscheidung von Feststoffen aus Fäkalschlamm durch mechanisches Filtrieren des Fäkalschlammes in einem Fäkalvorlaufbehälter mit eingebautem Siebrechen und Auspressen der Filterrückstände, dadurch gekennzeichnet, daß der Fäkalschlamm unter Druck in einer Kammer in eine vergleichmäßigte Wirbelströmung versetzt und durch ein mechanisches Grobfilter und ein mechanisches Feinfilter gepreßt wird, wobei die Feststoffe bestimmter Größe von den Filtern zurückgehalten werden, und der dünnflüssige Teil des Fäkalschlamms zur Kläranlage abfließt, dann die in der Kammer an den Filtern verbliebenen Feststoffe mit einem Kolben mechanisch verdichtet und einer Feststoffverpackungseinrichtung zugeführt werden, wobei die beim Verdichten ausgepreßte Flüssigkeit der Kläranlage zufließt und dann der Kolben in seine Ausgangsstellung zurückgezogen wird, wobei der Grobfilter und der Feinfilter durch in die Kammer eingesprühtes Druckwasser von anhaftenden Feststoffen gereinigt werden und das Gemisch aus Filterfeststoffen und Wasser der Kläranlage zugeführt wird.

2. Verfahren nach Anspruch 1, dadurch gekennzeichnet, daß die in die Feststoffverpackungseinrichtung gepreßten Feststoffe in eine Folienummantelung gedrückt und in verschlossene folienverpackte Transportballen umgeformt werden.

3. Verfahren nach Anspruch 2, dadurch gekennzeichnet, daß das beim Verpressen der Feststoffe in der Feststoffverpackungseinrichtung anfallende Restwasser in die Kläranlage geleitet wird.

4. Verfahren nach Anspruch 1, dadurch gekennzeichnet, daß der Fäkalschlamm durch eine Durchbrechung in dem Kolben in die Filterkammer eingebracht wird und hierbei eine die Durchbrechung abdeckende Klappe so anhebt, daß durch die Anströmung der Klappe der Strahl des Fäkalschlamms verwirbelt in die Filterkammer gegen die Kammerwand gerichtet einströmt.

5. Vorrichtung zur Durchführung des Verfahrens nach Anspruch 1 bis 4 mit einer trommelartig ausgebildeten Kammer (2), in der ein im Abstand von dem Mantel der Kammer (2) angeordneter aus stabförmigen über den Umfang des Mantels verteilte Filterelementen bestehender mechanischer Filter (4, 5) angeordnet und in der ein Kolben (7) zur Verdichtung der an dem Filter (4, 5) anhaftenden Feststoffe verschieblich ist, mit einer Entnahmeöffnung (9) für verdichtete Fäkalfeststoffe, gekennzeichnet dadurch, daß der Filter aus einem äußeren Feinfilter (4) und einem im Abstand von diesem angeordneten inneren Grobfilter (5) besteht, daß der in der Filterkammer (2) koaxial zu deren Mittelachse (6) verschiebliche Kolben (7) mit dem Feinfilter (4) und Grobfilter (5) in Wirkeingriff ist und daß an dem der Fäkalschlammeinlaßöffnung (8) abgewandten Abschnitt der Filterkammer (2) eine Feststoffaustrittsöffnung (9) ausgebildet ist, die mit einer Feststoffdeponiereinrichtung (63) verbunden ist.

6. Vorrichtung nach Anspruch 5, dadurch gekennzeichnet, daß der Kolben (7) mittels einer Kolbenstange (11) durch einen Hydraulikzylinder (3) betätigbar ist, der im Abstand von dem Kammerboden (12) angeordnet ist, durch den die Kolbenstange (11) abgedichtet geführt ist.

7. Vorrichtung nach Anspruch 5 und 6, dadurch gekennzeichnet, daß das Fäkalschlammeinlaßrohr (16) durch den unteren Kammerboden (12) geführt und auslaßseitig mit einer Verschlußeinrichtung (17) in Eingriff bringbar ist.

8. Vorrichtung nach Anspruch 7, dadurch gekennzeichnet, daß in dem Kolben (7) eine Durchbrechung (18) ausgebildet ist, die mittels einer dem Filterraum (19) zugeordneten Klappe (20) verschließbar ist und die in der dem Kammerboden (12) zugewandten Endstellung des Kolbens (7) koaxial zur Austrittsöffnung (21) des Fäkalschlammeinlaßrohres (16) angeordnet ist.

9. Vorrichtung nach Anspruch 8, dadurch gekennzeichnet, daß die Klappe (20) ein derartiges Gewicht aufweist, das sie auf dem Strahl des Fäkalschlamms derart aufliegt, daß dieser verwirbelt und radial zur Kammerwand gerichtet ablenkbar ist.

10. Vorrichtung nach Anspruch 5, dadurch gekennzeichnet, daß der Grobfilter (5) und der Feinfilter (4) durch sich über die Länge der Filterkammer (2) erstreckende am Kammerboden (12) befestigte Stäbe (22, 23) gebildet ist, in deren Zwischenräumen (24, 25) mit dem Kolben (7) verbundene Abstreifer (26, 27) geführt sind.

11. Vorrichtung nach Anspruch 10, dadurch gekennzeichnet, daß die Endabschnitte (56) der Stäbe (23) nach außen abgewinkelt und mit der Filterkammer (2) verbunden sind.

12. Vorrichtung nach Anspruch 11, dadurch gekennzeichnet, daß die abgewinkelten Endabschnitte (56) mit dem Auslauftrichter (36) verbunden sind.

13. Vorrichtung nach Anspruch 10, dadurch gekennzeichnet, daß die Endabschnitte (56) der Stäbe (23) koaxial zu deren Längsachsen ausgerichtet und zur Stabilisierung mittels Stützen (58) mit der Filterkammer (2) verbunden sind.

14. Vorrichtung nach Anspruch 10, dadurch gekennzeichnet, daß die Endabschnitte (55) der Stäbe (22) als Rückhalter (57) zur Mittelachse (6) der Filterkammer (2) abgewinkelt ausgebildet sind.

15. Vorrichtung nach Anspruch 10, dadurch gekennzeichnet, daß die Stäbe (22, 23) einen rechteckigen Querschnitt aufweisen und ihre langen Seitenflächen (28, 29) radial zur Mittelachse (6) der Filtertrommel (2) ausgerichtet sind.

16. Vorrichtung nach Anspruch 8 bis 15, dadurch gekennzeichnet, daß der Kolben (7) aus einer mittigen Kolbenplatte (49) besteht, an deren Umfang radial Abstreifer (26) angeordnet sind, an denen ein im Feinfilterraum (50) zwischen dem Grobfilter (5) und dem Feinfilter (4) angeordneter Ringkolben (51) befestigt ist, an dem radial nach außen gerichtet die Abstreifer (27) durch die Zwischenräume (25) geführt angeordnet sind.

17. Vorrichtung nach Anspruch 5 bis 16, dadurch gekennzeichnet, daß am unteren Abschnitt (30) der Filterkammer (2) vorzugsweise im Bereich des Kammerbodens (12) ein Wasserauslaßstutzen (31) ausgebildet ist.

18. Vorrichtung nach Anspruch 5 bis 17, dadurch gekennzeichnet, daß an der Kammerwand (32) der Filterkammer (2) mit Druckwasser beaufschlagbare in den Filterraum (19) gerichtete Düsen (33) angeordnet sind.

19. Vorrichtung nach Anspruch 5 bis 18, dadurch gekennzeichnet, daß an dem dem Kammerboden (12) abgewandten Endabschnitt (35) der Filterkammer (2) ein konischer Auslauftrichter (36) angeordnet ist, dessen Ausgang (37) der Feststoffdeponiereinrichtung (63) zugeordnet ist und der vor Beschickung der Filterkammer (2) mit einer Fäkalschlammcharge mit einem Filtratpropfenersatz (38) verfüllbar ist.

20. Vorrichtung nach Anspruch 19, dadurch gekennzeichnet, daß die Innenfläche (39) des Auslauftrichters (36) als Gleitfläche ausgebildet ist.

21. Vorrichtung nach Anspruch 19, dadurch gekennzeichnet, daß der Filtratpropfenersatz (38) aus biologisch abbaubaren Stoffen besteht.

22. Vorrichtung nach Anspruch 5 und 19, dadurch gekennzeichnet, daß bei Ausbildung der Feststoffdeponiereinrichtung (63) als Feststoffverpackungseinrichtung (10) der Ausgang (37) des Auslauftrichters (36) in ein Führungsrohr (40) geführt ist, auf dem eine Endlosfolie (41) angeordnet ist, an der mittels einer Trenn- und Klemmeinrichtung (42) mit trockengepreßten Fäkalfeststoffen gefüllte Beutel (43) od. dgl. ausbildbar sind.

23. Vorrichtung nach Anspruch 5 und 19, dadurch gekennzeichnet, daß die Feststoffdeponiereinrichtung (63) ein mit dem Ausgang (37) des Auslauftrichters (36) verbundenes Depotauslaufrohr (59) aufweist, das ausgangsseitig mit einem Depot (61) verbunden ist.

24. Vorrichtung nach Anspruch 22, dadurch gekennzeichnet, daß im Bereich des Ausgangs (37) des Auslauftrichters (36) in dem Führungsrohr (40) ein Wasserablaßstutzen (44) ausgebildet ist.

25. Vorrichtung nach Anspruch 5 bis 24, dadurch gekennzeichnet, daß die Filterkammer (2) in Kolbenvorschubrichtung aufwärts geneigt angeordnet ist.

26. Vorrchtung nach Anspruch 5 bis 25, dadurch gekennzeichnet, daß an der Filterkammer (2) verschließbare Inspektionsöffnungen (45) ausgebildet sind.

27. Vorrichtung nach Anspruch 5 bis 26, dadurch gekennzeichnet, daß das Absperrventil (46) des Fäkalschlammeinlaßrohres (16), der Hydraulikzylinder (3) und das den Düsen (33) zugeordnete Druckwasserventil (48) mittels einer elektronischen oder elektromagnetischen Steuereinrichtung betätigbar ist, mittels derer der Betrieb der Vorrichtung (1) manuell oder selbsttätig steuerbar ist.

**Claims**

1. Method for separating solid substances from faecal sludge through mechanical filtering of the faecal sludge in a faecal forerun container with built-in seiving and pressing of the filtration residues, characterised in that the faecal sludge under pressure in a chamber is moved into a steady turbulence and is pressed by a mechanical coarse filter and a mechanical fine filter, whereby solid substances of a certain size are held back by the filters and the watery part of the faecal sludge flows off to the sewage purification plant, then the solid substances remaining on the filters in the chamber are compressed mechanically with a piston and are led to a solid substances packing plant, whereby the fluid squeezed out during compression flows off to the sewage purification plant and the piston is pulled back to its normal position, whereby the coarse filter and the fine filter are purified of clinging solid substances by pressure water sprayed into the chamber and the mixture of filtered solid substances and water is led to the sewage purification plant.

2. Method according to claim 1, characterised in that the solid substances compressed into the solid substances packing plant are pushed into a foil covering and are re-shaped into sealed, foil-covered transportation bales.

3. Method according to claim 2, characterised in that the residual water resulting when the solid substances are compressed into the solid substances packing plant is led to the sewage purification plant.

4. Method according to claim 1, characterised in that the faecal sludge is brought into the filtering chamber through an opening in the piston and lifts a flap covering the opening in such a way that due to the pressure of the flap the stream of faecal sludge whirls into the filtering chamber, directed towards the chamber wall.

5. Device for implementing the method according to claims 1 to 4 with a drum-like chamber (2) in which a mechanical filter (4, 5) is arranged at a distance from the wall of the chamber (2) and consisting of rod-shaped filtering elements distributed over the perimeter of the wall, a piston (7) being locatable in said filter for compressing the solid substances clinging to the filter (4, 5), said piston having a withdrawal opening (9) for compressed faecal solid matter, characterised in that the filter consists of an outer fine filter (4) and an inner coarse filter (5) arranged at a distance from the latter, in that the piston (7) which can be located in the filtering chamber (2) coaxially to the median axis (6) of the latter operates in conjunction with the fine filter (4) and the coarse filter (5), and in that on the section of the filtering chamber that is turned away from the faecal sludge inlet (8) there is provided an outlet for solid substances (9) which is connected to a solid substances depositing plant (63).

6. Device according to claim 5, characterised in that the piston (7) can be put in operation by means of a piston rod (11) through a hydraulic cylinder (3) which is arranged at a distance from the bottom of the chamber (12) through which the sealed piston rod (11) is led.

7. Device according to claims 5 and 6, characterised in that the faecal sludge inlet pipe (16) is led through the lower chamber bottom (12) and can be brought into operation with a sealing device (17) at the outlet side.

8. Device according to claim 7, characterised in that a hole (18) is formed in the piston (7) which can be sealed by means of a flap (20) adjacent to the filtering room (19) and which is arranged in the end position of the piston (7) turned towards the chamber bottom (12), coaxially to the outlet (21) of the faecal sludge inlet pipe (16).

9. Device according to claim 8, characterised in that the flap (20) is provided with such a weight which it exerts on the stream of faecal sludge in such a way that the latter can be deflected, whirling and directed radially towards the chamber wall.

10. Device according to claim 5, characterised in that the coarse filter (5) and the fine filter (4) are formed of rods (22, 23) extending over the length of the filtering chamber (2) and attached to the bottom of the chamber (12), scrapers (26, 27) connected with the piston (7) being arranged in the gaps (24, 25) between the rods.

11. Device according to claim 10, characterised in that the end sections (56) of the rods (23) are bent outwards and are connected to the filtering chamber (2).

12. Device according to claim 11, characterised in that the bent end sections (56) are connected to the outlet funnel (36).

13. Device according to claim 10, characterised in that the end sections (56) of the rods (23) are arranged coaxially to their longitudinal axes and are connected for the purpose of stabilisation by means of supports (58) to the filtering chamber (2).

14. Device according to claim 10, characterized in that the end sections (55) of the rods (22) are formed bent as a support (57) to the median axis (6) of the filtering chamber (2).

15. Device according to claim 10, characterised in that the rods (22, 23) have a rectangular cross section and their long side sections (28, 29) are arranged radially to the median axis (6) of the filtering drum (2).

16. Device according to claims 8 to 15, characterised in that the piston (7) consists of a central piston plate 49 on the perimeter of which radial scrapers (26) are arranged to which, arranged in the fine filtering room (50) between the coarse filter (5) and the fine filter (4), an annular piston (51) is attached on which, radially directed outwards, the scrapers (27) are arranged between gaps (25).

17. Device according to claims 5 to 16, characterized in that on the lower section (30) of the filtering chamber (2) a water outlet support (31) is arranged preferably in the area of the bottom of the chamber (12).

18. Device according to claims 5 to 17, characterized in that on the chamber wall (32) of the filtering chamber (2) are arranged nozzles (33) directed into the filtering room (19) which can be supplied with pressurised water.

19. Device according to claims 5 to 18, characterized in that at the end section (35) of the filtering chamber turned away from the bottom of the chamber (12) a conical outlet funnel (36) is arranged the outlet (37) of which adjoins the solid substances depositing plant (65) and which, before the filtering chamber (2) is loaded with a faecal sludge charge, can be filled with a filtrate plug material (38).

20. Device according to claim 19, characterized in that the inner surface (39) of the outlet funnel (36) is designed as a sliding surface.

21 Device according to claim 19, characterized in that the filtrate plug material (38) consists of biologically decomposable materials.

22. Device according to claims 5 and 19, characterized in that during the formation of the solid substances depositing plant (63) as a solid substances packing plant, (10) the outlet (37) of the outlet funnel (36) is led into a guide pipe (40) on which an endless foil (41) is attached on which bags (43) filled with dry pressed faecal solid substances can be formed by means of a separating and clamping device (42).

23. Device according to claims 5 and 19, characterized in that the solid substances depositing plant (63) is provided with a deposit outlet pipe (59) connected with the outlet (37) of the outlet funnel (36), the deposit outlet pipe being connected to a depository (61).

24. Device according to claim 22, characterised in that in the area of the outlet (37) of the outlet funnel (36) in the guide pipe (40) a water outlet support (44) is arranged.

25. Device according to claims 5 to 24, characterized in that the filtering chamber (2) is arranged inclined upwards in the direction of travel of the piston.

26. Device according to claims 5 to 25, characterized in that sealable inspection openings (45) are formed in the filtering chamber (2).

27. Device according to claims 5 to 26, characterized in that the stop valve (46) of the faecal sludge inlet pipe (16), the hydraulic cylinder (3) and the pressure water valve 48 attributed to the nozzles (33) can be set in action by means of an electronic or electromagnetic control device, by means of which the working of the device (1) can be controlled manually of automatically.

**Revendications**

1. Procédé pour la séparation de substances solides de boue fécale par filtration mécanique de la boue fécale dans un récipient décanteur primaire de matière fécale, avec une grille de tamisage incorporée et desséchage par pression des refus de filtrage, caractérisé en ce que la boue fécale est déplacée sous pression dans une chambre, en un écoulement tourbillonnaire et pressé à travers un filtre grossier mécanique et un filtre fin mécanique, les substances solides atteignant une certaine taille étant retenues par les filtres, et la partie la partie très liquide de la boue fécale s'écoule vers l'installation de clarification, les substances demeurées dans les chambres, sur les filtres, sont ensuite compressées mécaniquement avec un piston et amenées à un dispositif d'empaquetage de substance, le liquide exprimé lors de la compression s'écoulant vers l'installation de clarification et le piston étant ensuite ramené dans sa position de départ, le filtre grossier et le filtre fin étant nettoyés des substances solides adhérentes par aspersion d'eau sous pression dans la chambre et le mélange composé des substances solides des filtres et de l'eau étant amené à l'installation de clarification.

2. Procédé selon la revendication 1, caractérisé en ce que les substances solides pressées dans le dispositif d'empaquetage de substance solide sont pressées dans une enveloppe en feuille et converties en balles de transport fermées emballées sous feuille.

3. Procédé selon la revendication 2, caractérisé en ce que l'eau résiduelle apparaissant lors du pressage des substances solides dans le dispositif d'empaquetage des substances solides est dirigée dans l'installation de clarification.

4. Procédé selon la revendication 1, caractérisé en ce que la boue fécale est introduite dans la chambre de filtre par un passage réalisé dans le piston et qu'en même temps un clapet recouvrant le passage se soulève de façon que, par l'écoulement arrivant sur le clapet, le jet de boue fécale entre en tourbillonnant dans la chambre de filtre, contre la paroi de chambre.

5. Dispositif pour la mise en oeuvre du procédé selon la revendication 1 à 4, avec une chambre réalisée en forme de tambour (2), dans laquelle un filtre (4, 5) mécanique se composant d'éléments filtrant en forme de barre répartis sur la périphérie de l'enveloppe est disposé à distance de l'enveloppe de la chambre (2) et dans lequel un piston (7) destiné à comprimer les substances solides adhérant au filtre (4, 5) est mobile, avec un orifice de prélèvement (9) pour les substances solides fécales comprimées, caractérisé en ce que le filtre se compose d'une filtre fin (4) extérieur et d'un filtre grossier (5) intérieur disposé à distance de celui-ci, en ce que le piston (7) mobile situé dans la chambre de filtre (2), coaxialement par rapport à son axe (6), est en prise fonctionnelle sur le filtre fin (4) et sur le filtre grossier (5), et en ce qu'un orifice de sortie de substance solide (9) relié à un dispositif de dépôt de substance solide (63) est réalisé sur la section de chambre de filtre (2) opposée à l'orifice d'introduction de boue fécale (8).

6. Dispositif selon la revendication 5, caractérisé en ce que le piston (7) est actionnable par une tige de piston (11), au moyen d'un vérin hydraulique (3), qui est disposé à distance du fond de chambre (12) à travers lequel la tige de piston (11) est guidée de manière étanche.

7. Dispositif selon la revendication 5 et 6, caractérisé en ce que le tube d'introduction de boue fécale (16) est guidé à travers le fond de chambre inférieur (12) et est susceptible d'être placé en prise sur un dispositif d'obturation (17), côté sortie.

8. Dispositif selon la revendication 7, caractérisé en ce qu'un passage (18) est réalisé dans le piston (7), passage obturable au moyen d'un clapet (20) affecté à l'enceinte de filtre (19) et qui est disposée coaxialement par rapport à l'orifice de sortie (21) du tube d'introduction de boue fécale (16) dans la position finale du piston (7) contiguë au fond de chambre (12).

9. Dispositif selon la revendication 8, caractérisé en ce que le clapet présente un poids tel qu'il appuie sur le jet de boue fécale de façon à ce que celui-ci tourbillonne et soit dévié radialement vers la paroi de chambre.

10. Dispositif selon la revendication 5, caractérisé en ce que le filtre grossier (5) et le filtre fin (4) sont formés par des barres (22, 23) s'étendant sur la longueur de chambre de filtre (2), fixées au fond de la chambre (12), dans les espaces intermédiaires (24, 25) desquelles les racleurs (26, 27) sont guidés avec le piston (7).

11. Dispositif selon la revendication 10, caractérisé en ce que les sections d'extrémité (56) des barres (23) sont repliées vers l'extérieur et reliées à la chambre de filtre (2).

12. Dispositif selon la revendication 11, caractérisé en ce que les sections d'extrémité (56) repliées sont reliées à l'entonnoir de sortie (36).

13. Dispositif selon la revendication 10, caractérisé en ce que les sections d'extrémité (56) des barres (23) sont orientées coaxialement à leurs axes longitudinaux et reliées au moyen d'appui (58) à la chambre de filtre (2) pour réaliser une stabilisation.

14. Dispositif selon la revendication 10, caractérisé en ce que les sections d'extrémités (55) des barres (22) sont réalisées repliées sous forme de retenue (57) par rapport à l'axe (6) de la chambre de filtre (2).

15. Dispositif selon la revendication 10, caractérisé en ce que les barres (22, 23) présentent une section transversale rectangulaire et que leur faces latérales (28, 29) longues sont orientées radialement par rapport à l'axe (6) du tambour de filtre (2).

16. Dispositif selon la revendication 8 à 15, caractérisé en ce que le piston (7) se compose d'une plaque de piston (49) centrale, à la périphérie de laquelle des racleurs (26) sont disposés radialement, sur lesquels est fixé un piston annulaire (51) disposé dans l'enceinte de filtre fin (50), entre le filtre grossier (5) et le filtre fin (4), piston annulaire (51) sur lequel les racleurs (27) orientés radialement vers l'extérieur sont guidés à travers les espaces intermédiaires (25).

17. Dispositif selon la revendication 5 à 16, caractérisé en ce qu'une tubulure de sortie d'eau (31) est réalisée sur la section inférieure (30) de la chambre de filtre (2), de préférence dans la zone du fond de chambre (12).

18. Dispositif selon la revendication 5 à 17, caractérisé en ce que des injecteurs (33) orientés dans l'enceinte de filtre et susceptible d'être soumis à de l'eau sous pression sont disposés sur la paroi de chambre (32) de la chambre de filtre (2).

19. Dispositif selon la revendication 5 à 18, caractérisé en ce qu'un entonnoir de sortie conique (36) est disposé sur la section d'extrémité (35) de la chambre de filtre (2) opposée au fond de chambre (12), entonnoir dont la sortie est affectée à un dispositif de dépôt de substances solides (63) et susceptible d'être rempli d'un substitut de filtre (38) avant garnissage de la chambre de filtre (2) par une charge de boue fécale.

20. Dispositif selon la revendication 19, caractérisé en ce que la surface intérieure (39) de l'entonnoir de sortie (36) est réalisée en surface glissante.

21. Dispositif selon la revendication 19, caractérisé en ce que le substitut de filtre (38) se compose de substances biologiquement dégradables.

22. Dispositif selon la revendication 5 et 19, caractérisé en ce que lors de la réalisation du dispositif de dépôt de substance solide (63) comme dispositif d'empaquetage de substance solide (10), la sortie (37) de l'entonnoir de sortie (36) est guidée dans un tube de guidage (40) sur lequel une feuille sans fin (41) est disposée, sur lequel des sacs (43), ou similaires, remplis de substances fécales séchées par pressage sont réalisables au moyen d'un dispositif de séparation et de serrage (42).

23. Dispositif selon la revendication 5 et 19, caractérisé en ce que le dispositif de dépôt de substance solide (63) présente un tube de sortie de dépôt (59) relié à la sortie (37) de l'entonnoir de sortie (36) et relié côté sortie à un dépôt (61).

24. Dispositif selon la revendication 22, caractérisé en ce qu'une tubulure d'évacuation d'eau (44) est réalisée dans le tube de guidage (40), au voisinage de la sortie (37) de l'entonnoir de sortie (36).

25. Dispositif selon la revendication 5 à 24, caractérisé en ce que la chambre de filtre (2) est disposée inclinée vers l'avant, dans le sens de l'avance du piston.

26. Dispositif selon la revendication 5 à 25, caractérisé en ce que des orifices d'inspection obturables (45) sont réalisés sur la chambre de filtre (2).

27. Dispositif selon la revendication 5 à 26, caractérisé en ce que la soupape d'obturation (46) du tube d'introduction de boue fécale (16), le vérin hydraulique (3) et la soupape d'eau sous pression (48) affectée aux injecteurs (33) sont actionnables au moyen d'un dispositif de commande électronique ou électromagnétique, au moyen duquel le fonctionnement du dispositif (1) peut être commandé manuellement ou automatiquement.

Fig.1

Fig. 2

Fig.3

Fig. 4

EP 0 244 765 B1

Fig.5

A-B

Fig.6